Europäisches Patentamt

European Patent Office

Office européen des brevets

(11) Publication number: **0 601 275 A2**

# EUROPEAN PATENT APPLICATION

(21) Application number: 93112663.5

(22) Date of filing: 06.08.93

(51) Int. Cl.⁵: **B01D 11/02**

(30) Priority: **11.12.92 US 989419**

(43) Date of publication of application:
**15.06.94 Bulletin 94/24**

(84) Designated Contracting States:
**DE GB IT**

(71) Applicant: **Hewlett-Packard Company**
**3000 Hanover Street**
**Palo Alto, California 94304(US)**

(72) Inventor: **Knipe, Charles R., Jr.**
**8 Jonlyn Lane**
**Collegeville, PA 19426(US)**

Inventor: **Frank, Lenore Randall**
**RD 1, Box 20**
**Landenberg, PA 19350(US)**
Inventor: **Hawk, David R.**
**RD 1, Box 1B**
**Landenberg PA 19350(US)**
Inventor: **Altmayer, Lee H.**
**3207 Falcon Lane**
**Wilmington DE 19808(US)**

(74) Representative: **Schoppe, Fritz, Dipl.-Ing.**
**Patentanwalt,**
**Georg-Kalb-Strasse 9**
**D-82049 Pullach (DE)**

(54) Methods and apparatus for automatically adding fluid reagents to sample containers.

(57) Methods and apparatus for adding modifiers to bulk extraction fluids of supercritical fluid extraction devices are disclosed. The bulk fluid and modifiers are either provided from separate sources (100,102) or a pre-mixed source (300) and are preferably introduced into an extraction system using a pump (310) or set of pumps 130,132 that include sensors (130,132,330) and a controller (120,320). By controlling the temperature and pressure of the mixture has now been found that the gas/liquid interface of the modifier on the sample can be controlled. In other words the vapor-liquid equilibria (VLE) is "tuned" to control the liquid and vapor composition within the sample container. Preferably, the conditions are controlled so that the modifier exists as a liquid within the sample container (210) and be effective to enhance the extraction.

FIG. 1

EP 0 601 275 A2

The present invention relates to methods for performing an analytical chemistry operation such as chromatography and extraction. More specifically, the present invention relates to supercritical fluid extraction and chromatography using a modifier added to the extraction fluid.

## Background of the Invention

Extraction is a well-known process in the field of analytical chemistry, and includes numerous variations. Essentially, an extraction involves contacting an extraction fluid (solvent) with a sample to either remove the analyte of interest or to remove extraneous materials, leaving behind the sample matrix. A relatively new type of extraction process involves the use of supercritical fluids as the solvent. Supercritical fluid extraction (SFE) has numerous advantages, one of which is that solvency is a function of the density (i.e., the pressure) of the supercritical fluid, permitting a high degree of selectivity. One way to extend the range of solvency is to employ mixtures of organic solvents added to the "bulk" supercritical fluid. The resultant mixture may either be supercritical or near-critical fluids at the extraction conditions. The transport properties of subcritical compressible liquid mixtures can exhibit nearly the same values as those found in the supercritical state. There are also other ways to use modifiers in an SFE system. See Knipe et al., "Supercritical Fluid Extraction: Developing a Turnkey Method," *ACS Symposium Series* 251-64 (1992). As explained by this paper, it has been found that extraction is affected by the addition of modifiers directly to the sample, rather than mixing them with the extraction fluid upstream from the sample. In other words, it is more effective to apply the modifier fluid directly to the sample and thereby modify the sample matrix, versus changing the solvent fluid stream composition upstream. This was determined by adding the modifier to an extraction cell or sample container prior to pressurizing it and connecting it with the extracting fluid stream.

Reagents such as wetting agents, swelling agents, derivatizing agents and digesting agents, as well as extraction fluids, are typically applied to samples directly, for example, by using pumps or dispensers. The reagents are then removed by heating (vaporizing the reagent) or displacing it directly with another fluid. In the laboratory, there are automated means for dispensing liquids, and liquids can be applied and displaced by other liquids in a controlled fashion at ambient pressure. Units are available from several manufacturers including Gilson, Tecan, and Zymark Corporation that manipulate liquids. Also, many liquid chromatographic autosamplers perform these functions. However, none of these systems include thermal and pressure controls that manipulate liquids, nor do any of them handle supercritical or vapor phase fluids. Instead, these systems control flow rate and volume.

An unsolved problem exists, therefore, because it is difficult to add fluid reagents directly to a sample container in a manner that does not require user intervention. In the area of sample preparation there are often numerous sample manipulation steps necessary to create a sample that is in a form that can be analyzed. Many of these steps have been automated by using apparatus to manipulate the sample. Often, liquids must be used for extracting or altering the sample. It would be desirable, however, to make use of the differences in vapor-liquid equilibria of the fluids to control their interaction with the sample. By controlling the temperature, pressure and composition of the fluid phase, the vapor-liquid equilibria (VLE) can be "tuned" to control the liquid and vapor compositions that interact with the sample. The VLE can be a simple single liquid phase or vapor phase, or the VLE can be very complex, with multiple liquid phases and a mixed vapor phase simultaneously present. *See* Berger "Density of Methanol-Carbon Dioxide Mixtures at Three Temperatures: Comparison with Vapor-Liquid Equilibria Measurements and Results Obtained," J. High Res. Chrom. 14:312-16 (May, 1991). By controlling the temperature, pressure and applied fluid composition, the user can control the application of liquid to a sample, the removal of liquid from a sample, or interaction of the sample with near critical and supercritical fluids. Since temperature, pressure, and applied fluid composition are easily automated parameters, the control of the fluid phases surrounding a sample can be automatically controlled with judicious choice of setpoints done in a prescribed order and for controlled periods of time.

It is therefore an object of the present invention to provide methods for selective solvation of a sample, the selective desorption from active sites, and selective modification of (or action with) a matrix, e.g., swelling the matrix due to the addition of reagent. Additionally, it is also an object of the present invention to provide methods for selective reaction with analytes in processes such as ion-pairing, chelation, and derivatization. Another object of the present invention is to provide the ability to add and remove fluids from pressurized and non-pressurized sample containers (CRC).

It is a further object of the present invention to deliver liquids of various chemical composition to a sample automatically and selectively convert a liquid to vapor or supercritical fluid, deliver a liquid to a sample from a fluid mixture, and return liquid deposited on a sample back to the vapor/supercritical fluid phase. Another object of the present invention is to control the manipulations set forth above with no user intervention and to automatically control these manipulations within a method and over methods used in sequence.

## Summary of the Invention

It has now been found that these and other objects are attained by maintaining the temperature and pressure within sample container below the vaporization point of the modifier, and maintaining the modifier in a concentration large enough so that at least two fluid phases are formed. One phase will mainly comprise the near-critical and/or supercritical fluid and some amount of modifier, and the other phase will mainly comprise the liquefied modifier possibly with some small amount of the bulk fluid. Thus, at least a portion of the modifier will liquify in the sample container. The methods of the present invention therefore preferably include the steps of adding a modifier to an extraction fluid to form a fluid mixture within a sample container, controlling either or both of the temperature and pressure of the fluid mixture to maintain the modifier as a liquid, performing an extraction, and changing either or both of the temperature and pressure of the fluid mixture to selectively remove an analyte from a sample. In a preferred embodiment, the fluid mixture is produced by mixing an extraction fluid and a modifier, preferably by separately pumping the extraction fluid and the modifier. However, in certain embodiments, the fluid mixture is supplied by a pressurized, pre-mixed source. Additionally, in certain embodiments, a derivatization or other type of reaction with either the analytes or the matrix may be performed by precipitating a fluid in a sample container, reacting a sample in the reaction cell with the precipitated fluid, and removing a product of the step of reacting the sample in the case of altering the analytes of interest. In some embodiments, a fully homogeneous solution of the bulk near-critical or supercritical fluid with the modifier components upstream of or within the sample chamber may never be achieved before the onset of extraction so that the precipitating step is not encountered. In those embodiments the invention adds the capability of wetting the sample directly with a liquid phase, preferably in an automatic fashion, in an appropriately timely manner preceding the extraction.

Apparatus for performing an extraction are also disclosed that comprise at least two sources of fluid mixed to form a fluid mixture, means for controlling either or both of the temperature and pressure of the fluid mixture, a sample container containing a sample in fluid communication with the fluid mixture and means for changing either or both of the temperature and pressure of the fluid mixture to selectively remove a component from the sample.

## Brief Description of the Drawings

FIG. 1 is a schematic illustration of an embodiment of the present invention;
FIG. 2 illustrates another embodiment of the present invention.
FIG. 3 is a schematic illustration of an embodiment of the present invention using multiple pumps.
FIG. 4 is a schematic illustrating the use of a quaternary pump.

## Detailed Description of the Preferred Embodiments

The present invention fills the currently unmet need to control the amount of liquid applied to a sample in a pressurized vessel. In particular, as well known to those of ordinary skill and explained above, in supercritical fluid extraction and chromatography a single fluid phase such as supercritical carbon dioxide ($CO_2$) is often insufficient to carry out an extraction or chromatographic separation. This limitation may be overcome by adding a modifier, e.g., water or alcohol, or a modifier with an additive, to the primary extraction fluid, e.g., carbon dioxide. As also explained above, it has been found that it is important to apply the modifier fluid directly to the sample, thereby modifying the sample matrix, versus changing the fluid stream composition upstream of the sample container.

The methods and apparatus of the present invention were developed in order to add and remove modifiers automatically, with no user intervention, thereby providing a system that can perform these operations repeatedly to a single sample or perform these operations automatically and in a reproducible manner to a sequence of samples. As known to those of ordinary skill, applying a modifier as a liquid to the sample can change the extractability of analytes from the sample. This may not be true if the modifier is added to the extraction fluid and is present as a component of a homogeneous near-critical or supercritical fluid mixture. In such situations the modifier is not in as intimate contact with the sample as it is when the modifier is in a liquid state. The process of the present invention allows the user to control how the sample will interact with the extraction/reaction fluid and the modifier.

It will be understood that while one of the benefits of the present invention is that the interaction between samples and an extraction fluid with modifier(s) can be controlled, the present invention can be used for numerous other applications using this same control of temperature, pressure, and applied fluid composition.

Reduced parameters are defined as the ratio between the condition of the fluid at some pressure, temperature, and density (P, T, $\rho$) and the values of the parameters at critical point conditions ($P_c$, $T_c$, $\rho_c$), thus:

$$P_r = \frac{P}{P_c} \qquad \text{(reduced pressure)}$$

$$T_r = \frac{T}{T_c} \qquad \text{(reduced temperature)}$$

$$\rho_r = \frac{\rho}{\rho_c} \qquad \text{(reduced density)}$$

Examples of conditions of interest for two fluids commonly used in the laboratory are: (1) hexane which at ambient conditions (T = 25°C, P = 1.0 atm) has a density, $\rho$ = 0.65 g/ml; and (2) supercritical carbon dioxide ($CO_2$) which at supercritical conditions (T = 40°C, P = 1100 psi (75 atm)) has a density $\rho$ = 0.25 g/ml.

Reduced parameters are dimensionless numbers that serve to normalize parameters for a given fluid so that the law of corresponding states, which provides methods for the estimation of values for the constants in equations of state, can be used.

Therefore, for purposes of the present invention, a "near-critical fluid" is defined as a substance existing at temperature and pressure conditions within a range of reduced parameters as follows:

$0.4 \leq P_r \leq 10$
$0.8 \leq T_r \leq 1.6$
$0.15 \leq \rho_r \leq 2.0$

Note that the cited range encompasses values at the parameters for temperatures above and below the critical temperature. Note that for temperatures less than the critical temperature the densities of interest are those of the compressible liquid phase. For example, liquid $CO_2$ at 35 bar and 0°C (273°K) with a density at 0.93 g/ml is considered to be a near-critical fluid by the above definition.

Additionally, typical liquids that are used as modifiers herein are preferably fluids that have values of their reduced parameters as follows:

$0.004 \leq P_r \leq 0.04$
$0.4 \leq T_r \leq 0.6$
$\rho_r \approx 2.0 - 3.0$

at ambient conditions (T = 25°C, P = 1.0 atm).

**EXAMPLE 1**

A binary mixture of carbon dioxide ($CO_2$) and methanol are flowed through a sample container. As used herein, a sample container includes an extraction cell or other location within a system where an extraction or separation is undertaken. The $CO_2$ is pumped as a liquid from a pressurized cylinder, and the methanol is added using a second pump. The two fluid streams are combined and the composition of the binary mixture is controlled by controlling the flow rates of the two pumps. By maintaining the temperature, pressure and applied fluid composition within the sample container below the vaporization point of methanol, and by maintaining the percentage of methanol in the composition at a value such that it is not all dissolved by the $CO_2$, some of the methanol will liquify in the sample container. In this example, a 5 mole % methanol/carbon dioxide mixture, flowing at 2.5 ml/min. for 15 minutes deposits approximately 1.0 ml of methanol in the sample container at 40 C and at 1117 psi. The sample in the sample container can be held at this temperature, pressure and applied fluid composition statically, i.e., in a "no flow" mode, to allow the liquid methanol to interact with the sample. The methanol is then removed by increasing the temperature and pressure while flowing either the 5% methanol/$CO_2$ mixture or pure $CO_2$ through the system and

4

raising the temperature to 80 C and the pressure to 5200 psi. The extraction fluid is then flowed through the sample container for 15 minutes and will remove the liquid methanol previously deposited. Therefore, the parameters of temperature, pressure, and composition are selected first to separate a fluid mixture into at least two fluid phases to enhance interaction with the sample and subsequently to support increased miscibility of the fluid composition to remove the liquid modifier from the sample to the extent which is appropriate for the given application. The automatic control of these steps is easily accomplished with such instrumentation as some embodiments of the HP7680 Supercritical Fluid Extractor sold by Hewlett-Packard Corporation, Palo Alto, CA (USA).

Thus, in a simple system such as that disclosed by Example 1, the present invention requires the steps of producing a fluid mixture that comprises at least a solvent and a modifier using a multi-pump system, delivering this mixture to a sample container, selectively liquefying at least one of the components in the sample container by controlling temperature and pressure, and selectively removing a liquid from the sample container through temperature and pressure control.

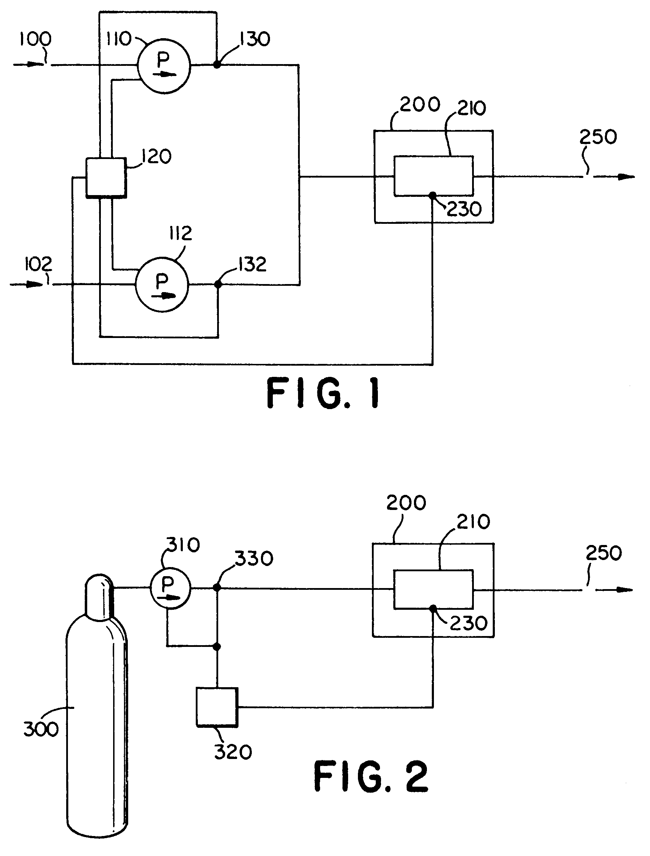

As shown in FIG. 1, a system may be constructed in accordance with Example 1 by connecting sources of extraction fluid and modifier 100,102 to pumps 110,112. As known to those of ordinary skill, controllable variable speed pumps are readily available and, in some instances, heating (or cooling) control can also be provided by the pump. The pumps 110,112 may each have a controller or control circuit and these pump controllers are controlled by a third controller 120 that is illustrated as being an external device, however, it will be understood that the controller 120 may also be part of either or both of the pumps 110,112. Moreover, in certain instances the controller 120 may represent a function of the software that controls the overall system. At the outlet of each pump 110,112 a sensor 130,132 is preferably disposed that measures any of the pressure, temperature, or flow rate of the respective fluid streams. As known to those of ordinary skill, the sensors 130,132 and their location are chosen depending upon the variable that is to be measured and the expected values of that variable. In certain embodiments, the present invention preferably uses metering pumps that have sensors that measure piston displacement and/or stepper motor speed. The pressure transducer of the metering pumps are used to sense over and under pressure conditions. The controlling pressure transducer is disposed close to a variable nozzle and also functions as a back-pressure regulator. In certain preferred embodiments, the sensors 130,132 measure temperature and pressure and provide a feedback signal to the controller 120 that in turn controls the pumps 110,112 to produce the desired flow characteristics. As explained above either or both the pumps 110,112 and their respective controllers and sensors, as well as the controller 120, may be an integral part of the instrument 200 in some embodiments.

One or more sensors 230 are connected to the sample container 210 providing a feedback signals to the controller 120 to indicate conditions within the sample container 210 so that the state of the modifier within the sample container 210 can be determined. After the mixed stream has flowed through the sample container 210, it flows through an exit port 250 to further processing steps, such as flowing through a trapping device in which the bulk extraction fluid and some amount of the modifier are separated from the extracted components. Such extraction can be accomplished by expanding directly onto a trap using a nozzle such as that disclosed in U.S. Patent No. 5,009,778 -- Nickerson which is incorporated herein by reference.

## EXAMPLE 1A

In Example 1, a dual-pump system was used to control the mixture composition being supplied to the extraction chamber. It is also possible to accomplish the same goal using a single pump system. In this case a single pump is used to deliver a pre-mixed binary mixture. It is possible to obtain pre-mixed cylinders from gas suppliers. Suppliers such as Scott Specialty Gases of Plumsteadville, PA, and Air Products of Allentown, PA will deliver mixed cylinders per customer order. Therefore, to carry out a method similar to that disclosed in Example 1, a 5% methanol/carbon dioxide cylinder is connected to a pump or other delivery system to produce the same results in terms of temperature, pressure, flow and applied fluid composition as those discussed in Example 1. Although this embodiment of the present invention does not add the modifier to the sample directly, by controlling the flow parameters, the liquid phase of the modifier can be controlled in the manner described above so that the modifier is a liquid within the sample container and is therefore most effective.

Thus, the methods of the present invention may also be accomplished by delivering a fluid mixture to a sample container, selectively liquefying at least one of the components during the extraction, while in the sample container by controlling temperature and pressure, and selectively removing a liquid from the sample container, again through control of the temperature and pressure conditions in the sample container.

5

A simple system made in accordance with Example 1A is illustrated in FIG. 2. As shown, a gas cylinder 300 that preferably contains a mixture of fluids is provided and connected to a flow system by a pump 310 that is controlled by a feedback signal transmitted by a sensor 330 to a controller 320. As explained above, these components may or may not be independent and may be part of the operating system of an instrument. The pump 310 is part of the instrument 200 and controls the flow of the fluid from the cylinder 300 and permits predetermined values of temperature, pressure and applied fluid composition to be attained by the instrument 200. Most preferably, the pump 310 is a metering pump with its own sensor. The mixed flow is connected to the sample container 210 that is part of an instrument 200. After passage through the sample container 210, the fluid again exits via an exit port 250.

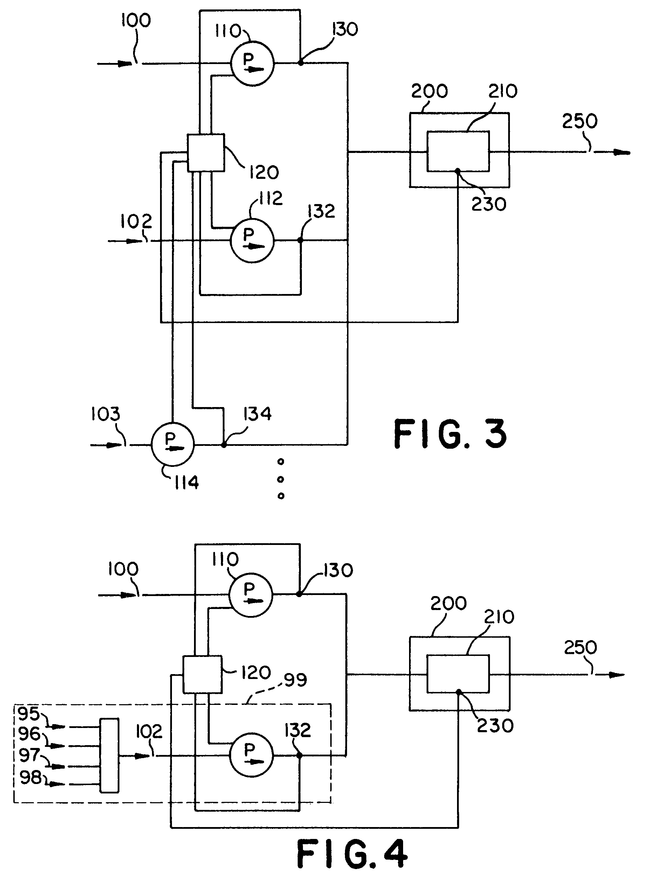

Examples 1 and 1A explained the present invention in terms of a binary fluid system. However, as noted above, tertiary and other multiple composition fluid streams can also be used in the present invention. Referring to FIG. 3, there is illustrated a schematic diagram showing how a third pump 114 can be integrated into the system of FIG. 1 to pump a third fluid from a third source 103. As shown, a third sensor 134 associated with the third pump 114 can be incorporated into the existing control system. It will be readily appreciated that a fourth and other additional fluid streams may be added in this manner.

Another technique for adding additional constituents to the fluid mixture used in the present invention is illustrated in FIG. 4. In this embodiment, a quaternary pump 99 is provided. The quaternary pump can select between or selectively mix four different fluid streams 95,96,97,98 and create a single output stream 102 that flows into the system as discussed above with reference to FIG. 1. Compared to the multiple pump system shown in FIG. 3, the use of a multiple channel pump such as the quaternary pump 99 is a technique that uses one physical pumping "channel" to add a plurality of modifiers to the system. The modifiers can be varied in terms of composition and level (i.e., concentration). It should be noted that in both the embodiments of FIGS. 3 and 4 the selection of modifier fluid is permitted so that multi-component modifier mixing is delivered and merged with the bulk extraction fluid (e.g., $CO_2$). However, the embodiments shown in FIGS. 3 and 4 can operate sequentially or simultaneously so that multicomponent modifier mixtures can be delivered and merge with the extraction fluid stream. The quaternary pump 99 will have its own controllers and sensors that permit the addition of a selected fluid stream at preselected conditions. As readily understood by those of ordinary skill, the control of the quaternary pump 99 may either be independent of the system controller 120 or integrated with the overall system. Finally, systems using binary, ternary or other multiple channel pumps may also be constructed in accordance with FIG. 4.

## EXAMPLE 2

In Examples 1-1A, a component was precipitated and then removed from a sample through the control of the pressure and temperature within the sample container. In a variation of this process, a fluid can be precipitated in the sample container, allowed to react with the sample, and the products of the reaction are then removed. It is a common practice in gas and liquid chromatography to chemically modify the analytes of interest. One example of this step is called derivatization, and it is used to alter the analyte to enhance its detectability, extractability or compatibility with a subsequent analytical separation technique (volatility). The derivatization reagents may be introduced to the sample container by simply pumping them in directly, or by using the methods discussed in Example 1 to apply them to the sample. The temperature and pressure in the sample container are then changed to aid and/or accelerate the derivatization reaction. The conditions of temperature and pressure are then altered again to remove the derivatized analytes or the excess reagents. Additional steps can be utilized to preferentially remove certain analytes or reagents, leaving the others behind, and vice versa. Also, additional steps may be used to introduce more reagents or add solvating-enhancing components. For example, interaction with a matrix may occur due to intimate contact, thereby chemically desorbing the analytes, as disclosed in the Knipe et al. article referred to above. Additionally, in some applications, the liquid modifier component may chemically modify or alter the sample matrix so that the components of interest may be separated.

Therefore, the present invention also encompasses methods whereby a reaction reagent is delivered to a sample container (either directly or as in Example 1), a derivatization reaction is carried out, and either the derivatized analytes are removed from the sample container or the excess reagents and derivatized analytes are removed.

From the foregoing Examples, it will be appreciated that the present invention permits the user to control the composition and quantity of the liquid applied by specifying temperature, pressure and applied fluid composition. Additionally, the present invention permits the user to control the composition and quantity of liquid removed by specifying temperature, pressure and applied fluid composition. Another feature of the present invention is that the user controls the sequence of liquid application and removal, as well as the selectivity of remaining components, whether in their original form or chemically reacted, by specifying the order in which the above parameters are set. Finally, as readily understood from these Examples, the concepts of the present invention can be extended beyond binary fluid mixtures to other fluid compositions. As seen in FIG. 3, a third source of an additional fluid 103 can be connected to a system similar to that shown in FIG. 1 using a third pump 114 and third sensor 134. It will be readily appreciated that any number of additional sources of fluid may be added in this manner.

In some embodiments, a fully homogeneous solution of the bulk near-critical or supercritical fluid with the modifier components upstream of or within the sample chamber may never be achieved before the onset of extraction so that the precipitating step is not encountered. In those embodiments the invention adds the capability of wetting the sample directly with a liquid phase, preferably in an automatic fashion, in an appropriately timely manner preceding the extraction. Presently there are no other SFE instruments or other types of extraction instruments which can automatically wet a sample with a liquid phase at any time throughout the sample preparation method being applied to the sample. It is well-established that the technique of SFE is very well suited to producing multiple extracted fractions from a single sample. This is achieved by adjusting the parameters of temperature, density (pressure) and composition of the extraction fluid. As noted above, the treatment of the sample with a fourth parameter, which composition of the condensed liquid phase, may be of importance. In the SFE art practiced today, this is achieved by a one-time wetting of the sample before being placed in an SFE instrument. The current approach does not allow the user to employ liquid phase contact at any other time in a method besides the initial extraction step. Also, if there is a queue of samples to be processed, with current SFE instruments the user must apply the liquid phase to each sample before each sample is processed. If all the samples are wet at one time, samples at the end of the queue will have been exposed to the wetting agent for longer than the first sample. This can adversely impact repeatability of analytical results. If the user chooses to wet each sample in the queue just before introduction into an SFE instrument, the capability for automatically processing a queue of samples is lost.

The automatic condensation/precipitation by exploiting the VLE of the extraction fluid mixture provides (1) automation of processing the samples with no manual intervention, (2) the capability of automatic liquid contact with the sample for extraction steps other than the first extraction step so that there is far greater flexibility in applying extraction/reaction chemical processes to a sample, and (3) better repeatability of analytical results from sample to sample since each sample is subjected to the same sample processing sequence in which all parameters, including liquid-phase exposure time, are well-controlled sample to sample.

Even when the modifier component is immiscible with the bulk near-critical or supercritical fluid at the point of merging the components or when the modifier becomes the bulk fluid for some time during the method -- such as wetting the sample, this invention provides a means of automatically applying the liquid phase directly to the sample at any time within the method as prescribed by the method. For example, the instrument can be used to extract components soluble in pure $CO_2$ producing fractions, then to dispense an aqueous solution of a derivating agent to wet the sample, then to maintain conditions for reactions, and finally to follow with extraction steps appropriate for recovering the derivatized analytes.

The present invention also affords automation of different chemical processes applied to one sample, resulting in an automated analytical "method." For automation of multiple samples in series, the present invention permits the user to select which analytical method will be applied to each sample, although these analytical methods may be different or the same for each sample. Thus, in a preferred embodiment, the methods of the present invention include providing a plurality of samples and an automated sample sequencing device that handles the samples. Such automated sequencing devices are well known in the art and can be readily adapted for use with the system disclosed herein. The incorporation of such a sequencing device permits performing an extraction on each of the samples in the plurality in an automated fashion, i.e., without further user intervention.

Hence, in a fully automated supercritical fluid extraction system such as those described herein, the user has available a plurality of modifiers. The modifiers vary both in composition and in concentration and can be delivered across the plurality of extraction steps and or the plurality of samples.

Although certain embodiments of the present invention have been set forth above and described in detail, these embodiments are meant to provide examples of the usefulness of the present invention and explain its operation and are not meant to limit the invention. Upon review of this specification, those of skill in the art will realize numerous variations, modifications and other applications for the invention disclosed. Accordingly, reference should be made to the appended claims in order to determine the scope of the present invention.

**EP 0 601 275 A2**

**Claims**

1. In an apparatus for performing an extraction comprising:

at least two sources of fluid (100,102) mixed to form a fluid mixture from a bulk fluid and modifier components;

means (120) for controlling a combination of the temperature and pressure and composition of the fluid mixture;

a sample container (210) containing a sample in fluid communication with the fluid mixture; the improvement comprising:

means for changing (110,112) either or both of the temperature and pressure of the fluid mixture to selectively remove one or more components from the sample,

whereby the sample is maintained at temperature and pressure conditions below a vaporization point of the modifier and modifier is maintained in a concentration large enough that the bulk extraction fluid cannot dissolve it all at the temperature and pressure conditions to maintain a homogeneous fluid phase, wherein at least a portion of the modifiers will liquify in the sample container (210).

2. The apparatus of claim 1, further comprising at least one pump in fluid communication with at least one component of the fluid mixture and connected to a sensor and a pump controller.

3. The apparatus of claim 1, further comprising a pressurized, premixed source (300) containing an extraction fluid and a modifier.

4. The apparatus of claim 3, further comprising at least one pump (110,112) in fluid communication with at least one component of the fluid mixture and connected to a sensor (130,132) and a pump controller (120).

5. The apparatus of claim 1 whereby the two pumps (110,112) can be independently controlled to also allow for independent delivery of fluids to a sample container (210).

6. The apparatus of claim 1 further comprising a multiple channel pump (99) for providing two or more streams of modifier components (95,96,97,98).

7. In a method of applying a single fluid to a sample container (210) either at a pressure equal to or greater than ambient pressure, the improvement wherein the state of the fluid is altered by changing one or both of the temperature and pressure of the sample container by one of liquefying a fluid, vaporizing a fluid, or creating one of a near critical fluid or a supercritical fluid.

8. The method of claim 7, further comprising the step of applying an additional fluid simultaneously with the single fluid.

9. The method of claim 7, further comprising the step of applying an additional fluid at a predetermined time after the single fluid.

10. The method of claim 7 further comprising performing an extraction comprising the steps of:

adding a modifier to a bulk extraction fluid to form a fluid mixture within a sample container (210) containing a sample;

controlling either or both of the temperature and pressure of the fluid mixture to attain at least one liquid phase within the sample container;

performing an extraction while maintaining the liquid phase of the fluid mixture in intimate contact with the sample; and

changing either or both of the temperature and pressure of the fluid mixture to selectively remove an analyte from a sample.

8

FIG. 1

FIG. 2

FIG. 3

FIG. 4